# EUROPÄISCHE PATENTSCHRIFT

(11) **EP 1 416 109 B1**
(45) Veröffentlichungstag und Bekanntmachung des Hinweises auf die Patenterteilung: **05.11.2014**
(21) Anmeldenummer: 03021890.3
(22) Anmeldetag: 27.09.2003
(51) Int. Cl.: E05B 79/02, E05B 17/04, E05B 79/22, F16C 1/04

(54) **Betätigungsvorrichtung für ein Schloss von Türen oder Klappen eines Fahrzeugs**
Actuating device for a vehicle lock of door or lid
Dispositif d'actionnement pour une serrure de porte ou d'ouvrant de véhicule

(30) Priorität: 30.10.2002 DE 10250450
(43) Veröffentlichungstag der Anmeldung: 06.05.2004
(73) Patentinhaber: Huf Hülsbeck & Fürst GmbH & Co. KG, 42551 Velbert (DE)
(72) Erfinder: Velicanin, Mensur, 42555 Velbert (DE); Wölfl, Thomas, 40723 Hilden (DE)
(74) Vertreter: Mentzel, Norbert

(56) Entgegenhaltungen:
- EP-A2- 0 836 833
- DE-A1- 10 016 633
- DE-A1- 19 649 905
- DE-C- 606 376
- FR-A- 2 634 260
- US-A- 3 103 126
- US-A- 3 940 946

## Beschreibung

An einer Tür oder einer Klappe eines Fahrzeugs befindet sich ein Schließzylinder, der durch Betätigung über einen Schlüssel auf ein Schloss in der Tür oder Klappe wirken soll. In Abhängigkeit von der Fahrzeug-Type bestehen unterschiedliche Längsabstände und Winkel zwischen dem Schließzylinder einerseits und dem Schloss andererseits. Diese werden von einer biegsamen Welle überbrückt.

Eine solche Vorrichtung ist aus der DE 196 49 905 A1 bekannt. Die Welle dieser bekannten Vorrichtung besteht aus einem gewendelten Draht. Je leichter die Welle verbogen werden soll, um so dünner muss die Drehstärke und/oder nachgiebiger das Drahtmaterial gewählt werden. Das kann bei der Übertragung des Drehmomentes zu einem Torsionsschlupf zwischen den beiden Enden der Drahtwendel führen. Dies gilt insbesondere dann, wenn die Drehmomente gegen einen die Drehung behindernden großen Widerstand ausgeführt werden müssen.

Aus der DE 31 21 835 A1 ist eine Kette bekannt, die aus vielen miteinander gekuppelten Kugelgelenkgliedern besteht und nur zur Übertragung von Zugbelastungen dient.

Die US 3,940,946 zeigt eine Verbindung in einem Fahrzeug zwischen einer Steuersäule und einem Steuerschaft, die mit ineinanderkuppelbaren Gelenkteilen versehen sind, die wie ein Kardangelenk wirken.

Für verschiedene Anwendungen, die nicht Schließzylinder und Schlösser betreffen, sind biegsame Wellen bekannt, die aus mehreren miteinander auf verschiedene Weise gekuppelten Wellenstücken bestehen.

So ist es aus der US 1,201,562 bekannt, die einzelnen Wellenstücke einerends mit einem Steckende und anderends mit einem Aufnahmeende zu versehen und unrund auszubilden, so dass mit dieser Welle Drehmomente übertragen werden können.

Bei einem aus der EP 0 836 833 A2 ersichtlichen chirurgischen Instrument ist es bekannt, gegeneinander biegsame Wellenstücke in einem flexiblen Rohr anzuordnen, mit denen die Drehbewegung einer Handhabe auf ein rotierendes Messer übertragen werden kann. Entsprechend den chirurgischen Erfordernissen lässt sich das Rohr mit den darin aufgenommenen Wellenstücken strecken und krümmen.

Ein winkelförmig abgeknicktes rohrförmiges Gehäuse wird auch bei der Antriebsvorrichtung der FR 2 634 260 A1 verwendet. Das rohrförmige Gehäuse sorgt auch hier für den Kupplungseingriff der Wellenelemente. Das Rohr oder ein solches Gehäuse sind zusätzliche Bauteile. Das Ineinandergreifen der Wellenstücke vollzieht sich im Rohrinneren und kann daher von außen nicht kontrolliert werden. Auch wenn das Rohr biegsam ist, schränkt es die eigene Flexibilität der darin gelagerten Kette aus ineinandergreifenden Wellenstücken ein.

Aus der DE 606 376 C ist es bekannt, zwischen einer Schlüsselhandhabe und einem Schlüsselbart einen biegsamen Schlüsselschaft anzuordnen, der aus ineinandergreifenden Schaftabschnitten besteht. Die Biegsamkeit ergibt sich, weil ein kopfartiger Steg am einen Ende des Schaftabschnitts in eine komplementäre Quernut des anderen Endes eingreift. Der biegsame Schlüsselschaft wird im Inneren eines gebogenen Rohrs geführt, das für einen Zusammenhalt der ineinandergreifenden Schaftabschnitte sorgt.

Ein biegsamer Schlüsselschaft ist auch aus der DE 604 902 C bekannt. Der Zusammenhalt der dortigen Schaftabschnitte erfolgt entweder durch einen elastischen Draht, der durch Axialbohrungen in den einzelnen Schaftabschnitten hindurchgeführt worden ist oder durch eine Schaftschutzhülle, in deren Inneren die Schaftabschnitte angeordnet sind. Ohne diese elastischen Mittel würden sich die Schaftabschnitte entkuppeln.

Die US 3,103,126 A zeigt eine flexible Kette oder einen flexiblen Schaft, der aus Hülsenabschnitten zusammengesetzt ist. Die Hülsenabschnitte haben beidendig Lappen, die formschlüssig Kugeln zwischen sich aufnehmen, an deren Oberfläche die Lappen benachbarter Hülsenabschnitte anliegen.

Eine ähnliche Lappenstruktur, allerdings ohne Kugeln, zeigt auch eine flexible Hohlwelle der DE 100 16 633 A1. Hier wird ein Rohr verwendet, in dessen Rohrwand, jeweils im Längsabstand, wellenförmige Spalte eingeschnitten werden, die das Rohr in mehrere Rohrabschnitte gliedern. Die Wellenform des Spalts lässt an den Enden der Abschnitte ineinandergreifende Finger entstehen, welche für eine Flexibilität des Rohres sorgen sollen. Damit durch radiale Bewegungen die Finger zwischen den Rohrabschnitten nicht gelöst werden, soll der Wellen-Spalt nicht vertikal zur Rohrachse, sondern unter einer Neigung ins Rohr eingeschnitten werden. Durch diese Neigung kommt es zu einer Überlappung von Innenkanten und Außenkanten der ineinandergreifenden Finger, die das Entkuppeln verhindern sollen. Der Erfindung liegt die Aufgabe zugrunde, eine zuverlässige Vorrichtung der im Oberbegriff von Anspruch 1 genannten Art zu entwickeln, welche die Übertragung von Drehmomenten und die Biegsamkeit der Welle verbessert. Dies wird erfindungsgemäß durch die im Anspruch 1 angegebenen Maßnahmen erreicht, denen folgende besondere Bedeutung zukommt.

Der Mittelteil der biegsamen Welle besteht zwar aus in sich starren Wellenstücken, aber diese sind durch komplementäre Kupplungsenden miteinander verbunden, die aus einem Einsteckende und einem Aufnahmeende bestehen. Die Besonderheit besteht darin, dass die Kupplungsenden der zunächst losen Wellenstücke durch axialen Druck schnäpperartig miteinander in Eingriff kommen. Dieser Schnappeingriff sorgt für einen ausreichenden axialen Zusammenhalt der Wellenstücke untereinander. Das Aufnahmeende und/oder das Einsteckende werden bei axialem Druck soweit verformt, dass sie ineinander fahren. Dann bilden die Wellenstücke eine zusammenhängende Baueinheit. Ein Lösen der Wellenstücke durch eine radiale Bewegung der Baueinheit ist nicht zu befürchten. Zusätzliche Schläuche oder Seile, die für den Eingriff der Wellenstücke sorgen, sind bei der Erfindung entbehrlich. Die Baueinheit kann bei der Montage der Vorrichtung als Ganzes gehandhabt werden.

Weitere Maßnahmen und Vorteile der Erfindung ergeben sich aus den Unteransprüchen der nachfolgenden Beschreibung und den Zeichnungen. In den Zeichnungen ist die Erfindung in zwei Ausführungsbeispielen dargestellt. Es zeigen:
- Fig. 1: die Draufsicht auf die Welle der erfindungsgemäßen Vorrichtung,
- Fig. 2: einen Längsschnitt durch Fig. 1 entlang der dortigen Schnittlinie II - II,
- Fig. 3: in Vergrößerung ein Wellenstück aus dem mittleren Bereich der in Fig. 2 gezeigten Welle vor dessen Kupplung mit weiteren Wellenstücken,
- Fig. 4 + 5: Querschnitte durch das Wellenstück von Fig. 3 längs der dortigen Schnittlinie IV - IV einerseits und V - V andererseits,
- Fig. 6: in einer der Fig. 3 entsprechenden Vergrößerung und im Längsschnitt, zwei miteinander gekuppelte Wellenstücke, wie sie im mittleren Bereich der in Fig. 2 gezeigten Welle verwendet werden,
- Fig. 7: in einer der Fig. 3 entsprechenden Darstellung, eine alternative Ausbildung des Wellenstücks und
- Fig. 8: die Draufsicht auf einen Bestandteil der in Fig. 7 gezeigten alternativen Wellenstücks.

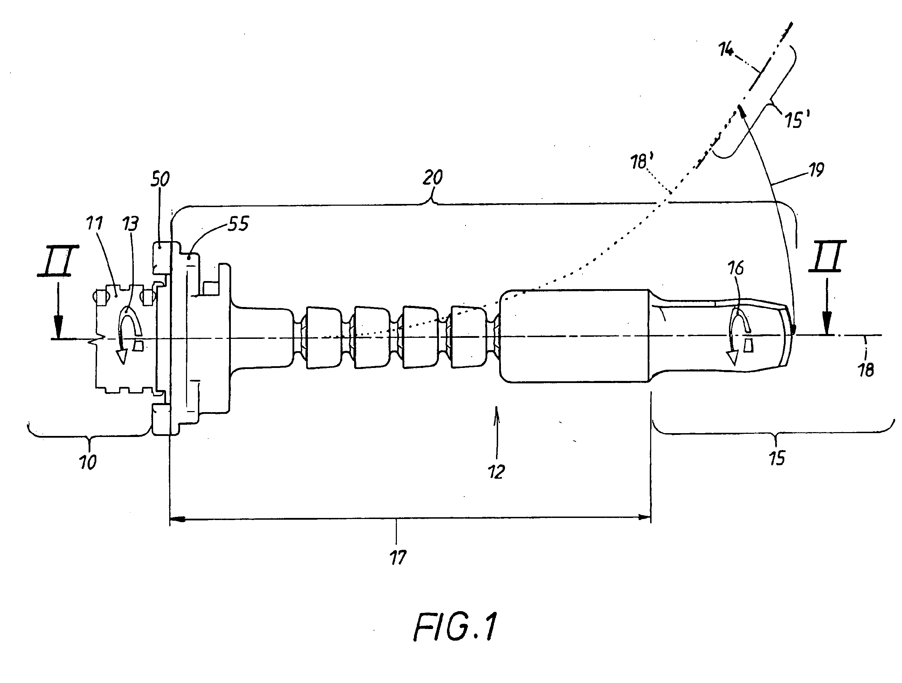

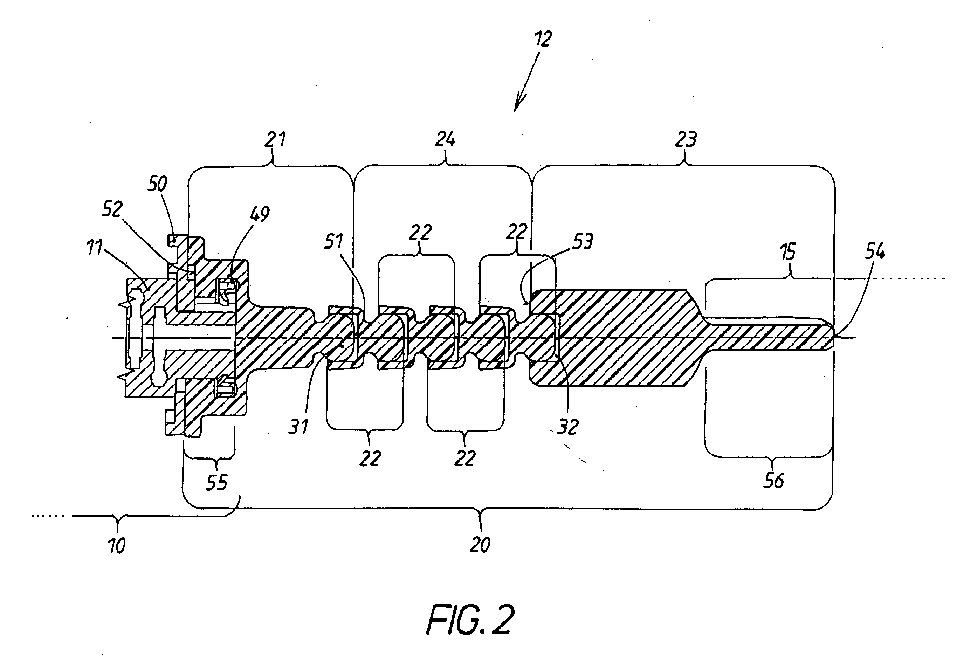

Zwischen einem Schließzylinder 10, von dem lediglich ein Bruchstück seines Rotors 11 gezeigt ist, und nicht näher gezeigten Schlossgliedern 15, ist eine Welle 12 angeordnet, die aus einer Schar von axial ineinander gekuppelten Wellenstücken 21 bis 23 besteht, die im Kupplungsfall eine besondere, biegsame Gliederkette 20 bilden. Die Gliederkette 20 ist in der Lage, ein auf dem Rotor 11 ausgeübtes, in Fig. 1 durch einen Drehpfeil 13 veranschaulichtes Eingangs-Drehmonent in ein durch den Pfeil 16 verdeutliches Ausgangs-Drehmoment zu übertragen. In Fig. 1 und 2 ist strichpunktiert die Wellenachse zwar gestreckt dargestellt, doch kann die Gliederkette 20 den durch Punktung in Fig. 1 veranschaulichten Bogenverlauf 18' aufweisen, wenn die Schlossglieder, die durch das Bezugszeichen 15' in Fig. 1 veranschaulichte versetzte Position einnehmen, welche um den Winkel 19 gegenüber der Strecklage 18 der Welle versetzt sind. Die Gliederkette 20 hat nicht nur die Aufgabe, den axialen Abstand 17 zwischen dem Schließzylinder 10 und dem Schloss 15 bzw. 15' zu überbrücken, sondern auch einen solchen Winkelversatz 19 zwischen der vom Rotor 11 bestimmten Achse 18 und einer gegenüber der Rotorachse 18 verwinkelten Drehachse 14 der Schlosseingangsglieder 15' zu überbrücken.

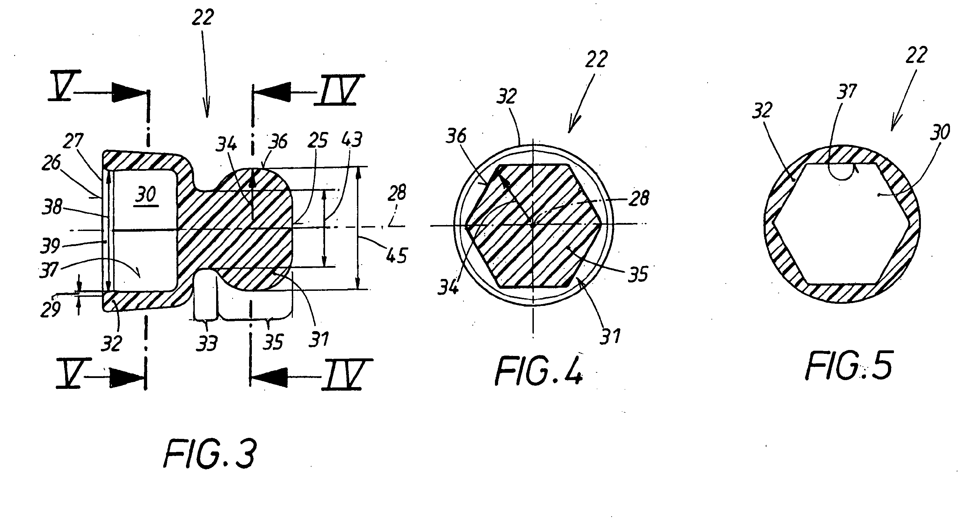

Dazu ist die Gliederkette 20 aus drei Sorten von Wellenstücken 21 bis 23 aufgebaut. Während das erste und letzte Wellenstück 21, 23 individuell, dem Rotor 11 einerseits, den Schlossgliedern 15 andererseits angepasst sind, besteht der Mittelteil 24 der Welle 12 aus im vorliegenden Fall vier aneinandergereihten formgleichen Wellenstücken 22. Der Aufbau eines solchen Wellenstücks 22 ist in den Fig. 3 bis 5 zu ersehen.

Das Wellenstück 22 besitzt aus zueinander komplementäre Kupplungsenden 31, 32 auf seinen beiden gegenüberliegenden Axialseiten 25, 26. Auf der einen Axialseite 25 befindet sich ein konvexes Steckende 31, während auf der gegenüberliegenden Axialseite 26 ein dazu passendes konkaves Aufnahmeende 32 angeordnet ist. Bezogen auf die mit 28 in Fig. 3 gekennzeichneten Gliederachse, entsteht das Steckende 31 durch einen im Anschluss an einen schlanken Achsabschnitt 33 sich anschließenden radialen Außenvorsprung 34, der nach allen Seiten der Gliederachse 28 sich erstreckt und daher einen als "Kupplungskopf" zu bezeichnendes Gebilde erzeugt. Der Kupplungskopf 35 hat aber, wie der Querschnitt von Fig. 4 zeigt, einen unrunden Umriss, der im vorliegenden Fall aus einer einen "Sechskant" erzeugenden Kuppelfläche 36 besteht.

Das gegenüberliegende Aufnahmeende 32 besitzt einen Aufnahmeraum 30, dessen Innenflächen ebenfalls unrund ausgebildet sind und Gegen- kuppelflächen 37 bilden, die hier einen "Innensechskant" erzeugen.

Wie Fig. 3 zeigt, ist im Öffnungsbereich 27 des Aufnahmeendes 32 ein radial nach innen weisender Innenvorsprung 29 vorgesehen, der im vorliegenden Fall als umlaufender Ringwulst 39 ausgebildet ist. Der Ringwulst 39 und der schlanke Achsabschnitt 33 können rotationssymmetrisch zur Gliederachse 28 ausgebildet sein.

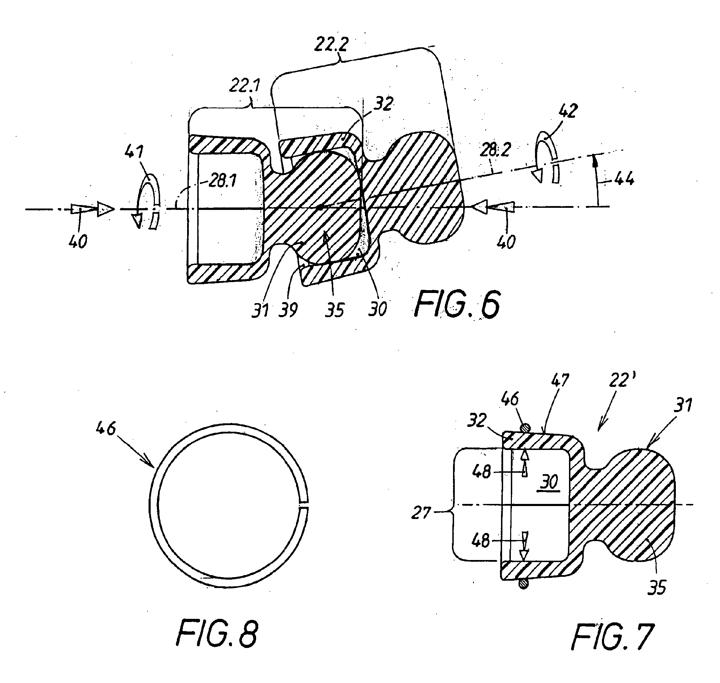

Die vorerwähnte Profilierung der beiden Kupplungsenden 31, 32 dient der Sicherung eines Kupplungseingriffs zwischen zwei Wellenstücken, was anhand der Fig. 6 näher erläutert wird. Das Wellenstück 22 mit seinen beiden Kupplungsenden 31, 32 ist einstückig aus Kunststoff ausgebildet. Der Kunststoff ist in den gewünschten Grenzen formelastisch. Obwohl die lichte Öffnungsweite 38 vom Ringinnenwulst 39 kleiner als die Radialbreite 45 des Kupplungskopf 35 ausgebildet ist, lassen sich die beiden Wellenstücke 21.1 und 22.2 von Fig. 6, mindestens wenn sie mit ihren beiden Gliederachsen 28.1 und 28.2 axial ausgerichtet sind, durch axialen Druck im Sinne der Pfeile 40 miteinander in Einriff bringen. Danach hält die Ringinnenwulst 39 des nachfolgenden Wellenstücks 22.2 in Fig. 6 den Kupplungskopf 35 des vorausgehenden Wellenstücks 22.1 fest. Wenn in dieser Weise mit allen Wellenstücken 21 bis 23 der Gliederkette 20 verfahren wurde, dann liegt eine zusammenhängende Baueinheit vor. Nach ihrem Kupplungseingriff kann die Baueinheit als Ganzes gehandhabt werden kann, um die Längenabstände und Winkel zwischen dem Schließzylinder 10 und den Schlossgliedern 15 bzw. 15' zu überbrücken. Es wird für einen Zusammenhalt der Wellenstücke 21 bis 23 gesorgt.

Die Bemessung des Aufnahmeraums 30 gegenüber dem Kupplungskopf 35 ist so gewählt, dass, wie Fig. 6 zeigt, eine Abwinklung 44 der Gliederachse 28.2 des nachfolgenden Wellenstücks 22.2 gegenüber der Gliederachse 28.1 des vorausgehenden Wellenstücks 22.1 möglich ist. Eine solche Abwinklung ist zwischen allen sechs Wellenstücken 21 bis 23 von Fig. 2 möglich. Durch Addition ergibt sich daher ein überraschend großer, aus Fig. 1 ersichtlicher Winkelversatz 19 am Eingangs- und Ausgangsende der Welle 12. Diese Abwinklung 44 ist möglich, weil der schlanke Hals 33 eine gegenüber der lichten Öffnungsweite 38 der Aufnahme 30 geringere Halsdicke 43 gemäß Fig. 3 aufweist.

Wie weiter in Fig. 6 veranschaulicht ist, können zwischen benachbarten Wellenstücken 22.1 und 22.2 trotz der Abwinklung 44, die durch die beiden Pfeile 41 und 42 veranschaulichte Drehmomente mit hohem Wirkungsgrad übertragen werden. Dafür sorgt die im Zusammenhang mit Fig. 4 und 5 erläuterte Umfangsprofilierung der Außenkuppelflächen 36 und Innenkuppelflächen 37 in den beiden miteinander in Eingriff stehenden Kupplungsenden 31, 32.

In Fig. 7 ist eine alternative Ausbildung und Nutzung eines Wellenstücks 22' gezeigt, das weitgehend eine mit dem axialen und radialen Profil des vorbeschriebenen Wellenstücks von Fig. 3 bis 5 übereinstimmenden Aufbau hat. Es sollen daher zur Benennung entsprechender Bauteile die gleichen Bezugszeichen, wie im ersten Ausführungsbeispiel von Fig. 1 bis 6 verwendet werden. Es genügt lediglich auf die Unterschiede einzugehen.

Ein erster Unterschied des Wellenstücks 22' besteht darin, dass im Öffnungsbereich 27 der Aufnahme 30 keine radialen Innenvorsprünge, also kein Ringinnenwulst 39 vorgesehen ist. Auch in diesem Fall besteht das Wellenstück 22' aus formelastischem Material, das einen axialen Kupplungseingriff benachbarter Kupplungsenden 31, 32 gestattet. Zur Sicherung des Kupplungseingriffs ist aber hier ein im Wesentlichen steifes Umfangsglied 46 vorgesehen, welches, in Draufsicht in Fig. 8 gezeigt ist. Das Umfangsglied 46 besteht aus einem metallischen, geschlitzen Ring, nach dem Kupplungseingriff alle. Wellenstücke 21 bis 23 auf die jeweiligen Aufnahmeenden 32 aufgesetzt werden. Der Schlitzring 46 wird über die Mantelfläche 47 vom Aufnahmeende 32 gesetzt, wie aus dem Längsschnitt von Fig. 7 zu erkennen ist. Dadurch werden die im Kupplungsfall auftretenden, durch die Kraftpfeile 48 in Fig. 7 veranschaulichten Radialkräfte 48 aufgenommen. Der Ring 46 versteift das Aufnahmeende 32 gegenüber solchen Radialkräften 48. Der Zusammenhalt der gekuppelten Wellenstücke 21 bis 23 ist dadurch kraftschlüssig gewährleistet.

Die vorbeschriebenen radialen Außenvorsprünge 34 am Steckende 31 und die radialen Innenvorsprünge 29 in der Kupplungsaufnahme 30 können auch aus Segmenten oder Nocken bestehen. Die Kuppelflächen 36 und Gegenkuppelflächen 37 der beiden komplementären Kupplungsenden 31, 32 könnten auch aus radialen Schulten und Gegenschultern gebildet sein, die gemäß Fig. 6 die Drehmomente 41, 42 zwischen den gekuppelten Wellenstücken 22.1 und 22.2 übertragen.

Wie der Längsschnitt in Fig. 2 zeigt, ist das erste Wellenstück 21 nur an seiner inneren Axialseite 51 mit einem der beiden Kupplungsenden versehen, nämlich im vorliegenden Falle mit einem Steckende 31. Entsprechendes gilt für die aus Fig. 2 ersichtliche äußere Axialseite 53 vom letzten Wellenstück 23. Dort befindet sich das beschriebene Aufnahmeende 32.

An der äußeren Axialseite 52 des ersten Wellenstücks 21 sitzt ein Anschlussende 55 für den Abgang des Rotors 11. Der Übergang zwischen dem Rotor 11 und dem Anschlussende 55 geschieht im vorliegenden Fall mittels eines Überlastglieds 50. Dieses Überlastglied 50 ist drehfest mit dem Ausgang des Rotors 11 verbunden. Das Überlastglied 50 ist aber auch mit dem Anschlussende 55 vom ersten Wellenstück 21 in drehfester Verbindung, wenn mit einem im Rotor 11 steckenden Schlüssel Eingangsdrehmomente 13 ausgeübt werden, die unter einen bestimmten Schwellenwert liegen. Andernfalls, wenn mit Einbruchswerkzeugen die Welle 12 eingangsseitig manipuliert wird, setzt das Überlastglied 50 die Verbindung zum Anschlussende 55 in Freilauf. Die gewaltsame Drehung des Rotors 11 wird dadurch nicht auf die Welle 12 übertragen.

Der Ausgang des Rotors 11 ist mit dem Anschlussende 55 axialfest verbunden, was z.B. durch einen Sprengring 49 in einem Hinterschnitt des Anschlussende 55 geschieht, der in eine Ringnut am Rotorausgang eingreift.

Das letzte Wellenstück 23 ist an seiner äußeren Axialseite 34 mit einem Mitnehmer in der 56 versehen, der für eine drehfeste Verbindung mit nicht näher gezeigten Schlossgliedern 15 sorgt.

### Bezugszeichenliste:

- 10: Schließzylinder
- 11: Rotor
- 12: biegsame Welle
- 13: Pfeil des Eingangs-Drehmoments
- 14: abgewinkelte Drehachse der Schlossglieder
- 15: Schlossglieder bei 18
- 15': Winkelversatz von 15 bei 18' (Fig. 1)
- 16: Pfeil des Ausgangs-Drehomentes
- 17: axialer Abstand zwischen 10, 15 (Fig. 1 )
- 18: Rotorachse, gestreckte Wellenachse (Fig. 1)
- 18': Bogenverlauf von 18 (Fig. 1)
- 19: Winkelversatz zwischen 18 und 14 (Fig. 1)
- 20: Gliederkette aus 21 bis 23
- 21: erstes Wellenstück von 12
- 22: Wellenstück bei 24
- 22': alternative Ausbildung von 22 (Fig. 7)
- 22.1: vorausgehendes Wellenstück von 22 (Fig. 6)
- 22.2: nachfolgendes Wellenstück von 22 (Fig. 6)
- 23: letztes Wellenstück von 12
- 24: Mittelteil von 12
- 25: Eine Axialseite 22 für 31
- 26: andere Axialseite von 22 für 32
- 27: Öffnungsbereich von 32 (Fig. 3)
- 28: Gliederachse von 22 (Fig. 3)
- 28.1: Gliederachse von 22.1 (Fig. 6)
- 28.2: Gliederachse von 22.2 (Fig. 6)
- 29: radialer Innenvorsprung von 32 (Fig. 3)
- 30: Aufnahmeraum von 32 (Fig. 3, 5)
- 31: Einkupplungsende von 22, konvexes Steckende
- 32: anderes Kupplungsende von 22, konkaves Aufnahmeende
- 33: schlanker Achsabschnitt von 22, Hals (Fig. 3)
- 34: radialer Außenvorsprung bei 31 (Fig. 3)
- 35: Kupplungskopf bei 31
- 36: Kuppelfläche von 35, Außensechskant (Fig. 4)
- 37: Gegenkuppelfläche von 32, Innensechskant(Fig.5)
- 38: lichte Öffnungsweite bei 39
- 39: Ringinnenwulst von 30
- 40: axialer Kupplungsvorgang zwischen 20.1, 20.2 (Fig. 6)
- 41: Kraftpfeil des auf 22.1 ausgeübten Drehmoments (Fig. 6)
- 42: Pfeil des von 22.2 abgegebenen Drehmoments (Fig. 6)
- 43: Halsdicke von 33 (Fig. 3)
- 44: Abwinklung von 28.2 gegenüber 28.1 (Fig. 6)
- 45: radiale Breite von 35 (Fig. 3)
- 46: Umfangsgebiet von 22', Schlitzring (Fig. 7,8)
- 47: Mantelfläche von 32 bei 22' (Fig. 7)
- 48: Radialkräfte auf 32 von 22' (Fig. 7)
- 49: Sprengring bei 55 (Fig. 2)
- 50: Überlastglied (Fig. 2)
- 51: innere Axialseite von 21 (Fig. 2)
- 52: äußere Axialseite von 21 (Fig. 2)
- 53: äußere Axialseite von 23 (Fig. 2)
- 54: innere Axialseite von 23 (Fig. 2)
- 55: Anschlussende von 21 für 11
- 56: Mitnehmerende von 23 für 15

## Patentansprüche

1. Vorrichtung mit einer biegsamen Welle (12) zum Überbrücken von Längsabständen und Winkeln zwischen einem Schließzylinder (10) und einem Schloss (15) an einer Tür oder einer Klappe eines Fahrzeugs,
**dadurch gekennzeichnet,**
**dass** ein Mittelteil (24) der Welle (12) aus in sich starren Wellenstücken (22.1, 22.2) besteht und jedes Wellenstück zwei Kupplungsenden (31, 32) aufweist,
von denen das eine Einsteckende (31) und das andere ein damit kuppelbares Aufnahmeende (32) ist,
**dass** die beiden Kupplungsenden (31, 32) im Kupplungsfall zwar in Achsrichtung (18) eine Verwinkelung (44) benachbarter Wellenstücke (22.1, 22.2) zueinander gestatten,
**dass** aber - in Drehrichtung der Welle (12) gesehen - die beiden Kupplungsenden (31, 32) unrunde Kuppelflächen (36) bzw. Gegenkuppelflächen (37) besitzen, mit welchen ein Drehmoment (41, 42) zwischen den Wellenstücken (22.1, 22.2) übertragbar ist,
**dass** die Kupplungsenden (31, 32) der zunächst losen Wellenstücke (22.1, 22.2) durch axialen Druck (40) schnäpperartig miteinander in Eingriff kommen können und für einen Zusammenhalt der Wellenstücke (21 bis 23) sorgen können
und **dass** die gekuppelten Wellenstücke eine zusammenhängende Baueinheit bilden, die bei der Montage der Vorrichtung als Ganzes gehandhabt werden kann.

2. Vorrichtung nach Anspruch 1, **dadurch gekennzeichnet, dass** vor dem Mittelteil (24) der Welle (12) ein erstes Wellenstück (21) angeordnet ist, welches individuell dem Rotor (11) angepasst ist, während am Ende des Mittelteils (24) ein letztes Wellenstück (23) sich befindet, welches an die Schlossglieder (15) angepasst ist
und dass sowohl das erste als auch das letzte Wellenstück (21, 23) eigene Kupplungsenden (31, 32) aufweisen, die mit dem jeweils komplementären Kupplungsende (31, 32) vom benachbarten Wellenstück (21.1, 22,2) des Mittelteils (24) in Eingriff stehen.

3. Vorrichtung nach Anspruch 1 oder 2, **dadurch gekennzeichnet, dass** der Kupplungseingriff der beiden Wellenstücke (21 bis 23) formschlüssig und/oder kraftschlüssig gesichert ist.

4. Vorrichtung nach einem der Ansprüche 1 bis 3, **dadurch gekennzeichnet, dass** mindestens eines der beiden Kupplungsenden (31, 32) der Wellenstücke (21 bis 23) aus formelastischem Material besteht.

5. Vorrichtung nach Anspruch 4, **dadurch gekennzeichnet, dass** das Wellenstück (22) mit seinem bzw. mit seinen Kupplungsenden (31, 32) einstückig aus Kunststoffmaterial ausgebildet ist.

6. Vorrichtung nach einem der Ansprüche 1 bis 5, **dadurch gekennzeichnet, dass** die beiden Kupplungsenden (31, 32) in Achsrichtung (28) und/oder in Drehrichtung der Wellenstücke (22) zueinander komplementär profiliert sind.

7. Betätigungsvorrichtung nach einem der Ansprüche 1 bis 6, **dadurch gekennzeichnet, dass** das Aufnahmeende (32) des Wellenstücks (22) im Öffnungsbereich (27) einen radialen Innenvorsprung (29) und das Steckende (31), im Anschluss einen schlanken Achsabschnitt (33), einen radialen Außenvorsprung (34) aufweist
und dass die Öffnungsweite (38) vom Aufnahmeende (32) im Bereich des Innenvorsprungs (29) zwar kleiner als die Radialbreite (45) im Bereich des Außenvorsprungs (34) vom Steckende (31), aber größer als die Radialdicke (43) vom Achsabschnitt (33) des Steckendes (31) ausgebildet ist.

8. Vorrichtung nach Anspruch 7, **dadurch gekennzeichnet, dass** der vollzogene Kupplungseingriff durch das Hintergreifen des Außenvorsprungs (34) vom Steckende (31) am Innenvorsprung (29) des Aufnahmeendes (32) gesichert ist und dass im Kupplungsfall der Innenvorsprung (29) sich im Bereich des schlanken Achsabschnitts (33) vom Steckende (31) befindet.

9. Vorrichtung nach Anspruch 8 oder 9, **dadurch gekennzeichnet, dass** der radiale Außenvorsprung (34) aus einem unrunden Kopf (35) am Steckende (31) des Wellenstücks (22) gebildet ist, welcher hinter einem halsartigen Achsabschnitt (Hals 33) sitzt
und dass der Innenvorsprung (29) aus einer umlaufenden Ringwulst (39) im Inneren (30) des Aufnahmeendes (32) steht.

10. Vorrichtung nach Anspruch 9, **dadurch gekennzeichnet, dass** der Hals (33) am Steckende (31) und der Ringwulst (39) im Aufnahmeende (32) rotationssymmetrisch zur Achse (28) des Wellenstücks (22) ausgebildet sind.

11. Vorrichtung nach einem der Ansprüche 1 bis 10, **dadurch gekennzeichnet, dass** das Aufnahmeende (32) zwar aus formelastischem Material besteht,
aber der Kupplungseingriff des Steckendes (31) durch ein im Wesentlichen starres Umfangsglied (46) am Aufnahmeende (32) gesichert ist, welches das Aufnahmeende (32) radial nach außen versteift.

12. Vorrichtung nach Anspruch 11, **dadurch gekennzeichnet, dass** das Aufnahmeende (32) aus Kunststoff und das Umfangsglied aus einem metallischen Ring (46) bestehen.

13. Vorrichtung nach Anspruch 12, **dadurch gekennzeichnet, dass** das Umfangsglied ein Schlitzring (46) ist.

14. Vorrichtung nach einem der Ansprüche 1 bis 13, **dadurch gekennzeichnet, dass** die Welle (12) aus einer Schar von Wellenstücken (21 bis 23) besteht, die auf ihrer einen Axialseite (26, 53) das Aufnahmeende (32) und aus ihrer anderen Axialseite (25, 51) das Steckende (31) aufweisen
und dass die Wellenstücke (21 bis 23) nach gegenseitiger Kupplung eine biegsame Kette (20) aus drehfest aneinanderhängenden Kettgliedern bilden.

15. Vorrichtung nach Anspruch 14, **dadurch gekennzeichnet, dass** die Steckenden (31) einerseits und die Aufnahmeenden (32) andererseits aller Wellenstücke (21 bis 23) der Gliederkette (20) zueinander formgleich ausgebildet sind.

16. Vorrichtung nach Anspruch 14 oder 15, **dadurch gekennzeichnet, dass** das erste und das letzte Wellenstück (21, 23) der Gliederkette (20) nur an ihrer äußeren (53) bzw. inneren Axialseite (51) zueinander komplementäre Kupplungsenden (31, 32) aufweisen,
dass aber das erste Wellenstück (21) an seiner gegenüberliegenden Axialseite (52) ein Anschlussende (55) zum drehfesten Anschluss eines Zylinderkerns (11) des Schließzylinders (10) besitzt,
während in der inneren Axialseite (54) vom letzten Wellenstück ein Mitnehmerende (56) sich befindet, welches zur drehfesten Verbindung mit den Schlossgliedern (15) dient.

17. Vorrichtung nach Anspruch 16, **dadurch gekennzeichnet, dass** das letzte Wellenstück (23) mit seinem Mitnehmerende (56) und das erste Wellenstück (21) mit wenigstens einem Teil seines Anschlussendes (55) einstückig ausgebildet sind.

18. Vorrichtung nach Anspruch 16 oder 17, **dadurch gekennzeichnet, dass** in das Anschlussende (55) des ersten Wellenstücks (21) ein Überlastglied (50) integriert ist,
welches bei normaler Schlüsselbetätigung des Schließzylinders (11) für eine drehfeste Verbindung zwischen dem Zylinderkern (11) und dem Anschlussende (55) vom Wellenstück (21) sorgt,
dass aber bei einer gewaltsamen Betätigung des Schließzylinders (10) durch Einbruchswerkzeuge, bei welcher eine bestimmte Drehmoment-Grenze überschritten wird, das Überlastglied (50) für einen Freilauf zwischen dem Zylinderkern (11) und dem Anschlussende (55) des ersten Wellenstücks (21) sorgt.

## Claims

1. Device with a flexible shaft (12) to bridge longitudinal distances and angles between a locking cylinder (10) and a lock (15) on a door or lid of a vehicle,
**characterized in that**,
a centre piece (24) of the shaft (12) comprises of rigid parts of shafts (22.1, 22.2) and each part of the shaft features two coupling ends (31, 32),
of which one is a plug-in end (31) and, thus, the other is a reception end (32),
that, when coupled, the two coupling ends (31, 32) permit adjacent parts of the shaft (22.1, 22.2) to be angled (44) to one another in the axial direction (18),
however - viewed from the direction of rotation of the shaft (12) - both ends of the coupling (31, 32) have coupling surfaces (36) that are not round and opposing coupling surfaces (37), with which a torque (41, 42) is transmitted between the parts of the shaft (22.1, 22.2),
that the coupling ends (31, 32) can engage, by means of catches, with the next part of the shaft (22.1, 22.2) not fixed through axial pressure (40) and can provide cohesion of the parts of the shaft (21 to 23)
and that the parts of the shaft form a continuous structural unit when coupled that can be treated as a complete unit when the fixture during assembly.

2. Device according to claim 1, **characterized in that** a first part of the shaft (21) is arranged upstream of the centre part (24) of the shaft (12) that is individually adapted to the rotor (11), whilst a final part of the shaft (23) is located at the end of the centre part (24), which is adapted to the lock element (15) and that both the first and last part of the shaft (21, 23) feature their own coupling end (31, 32) that are engaged with the respective complementary end of the coupling (31, 32) of the adjacent part of the shaft (21.1, 22.2) of the centre part (24).

3. Device according to claim 1 or 2, **characterized in that** the when both parts of the shaft (21 to 23) is secured by positive locking and/or forced locking when the coupling engages.

4. Device according to one of the claims 1 to 3, **characterized in that** a minimum of one of the two coupling ends (31, 32) of the parts of the shaft (21 to 23) comprises of a shape elastic material.

5. Device according to claim 4, **characterized in that** the part of the shaft (22), with its coupling ends (31, 32), is formed in a single piece from synthetic material.

6. Device according to one of the claims 1 to 5, **characterized in that** both coupling ends (31, 32) have a profile complemented to one another in the axial direction (28) and/or in the direction of rotation of the parts of the shaft (22).

7. Actuating device according to one of the claims. 1 to 6, **characterized in that** the reception end (32) of the part of the shaft (22) features a radial internal protrusion (29) into the opening area (27) and the insert end (31), at the end of a slender axis section (33), features a radial eternal protrusion (34).
and that the width of the opening (38) of the reception end (32) in the area of the internal protrusion (29) is formed smaller than the radial width (45) in the area of the external protrusion (34) of the insert end (31), but larger than the radial thickness (43) of the axis section (33) of the insert end (31).

8. Device according to claim 7, **characterized in that** the coupling is secured by the external protrusion (34) of the insert end (31) fully engaging on the internal protrusion (29) of the reception end (32).
and that when coupled, the internal protrusion (29) is located in the area of the slender axis section (33) of the insert end (31).

9. Device according to claim 8 or 9, **characterized in that** the radial external protrusion (34) is formed by a head (35), that is not round, on the insert end (31) of the part of the shaft (22), that sits behind a section of the axis section (neck 33) in the form of a neck
and that the internal protrusion (29) is a circumferential circular bead (39) on the inside (30) of the reception end (32).

10. Device according to claim 9, **characterized in that** the neck (33) at the insert end (31) and circular bead (39) at the reception end (32) are formed rotationally symmetrical to the axis (28) of the part of the shaft (22).

11. Device according to one of the claims 1 to 10, **characterized in that** the reception end (32) is formed from shape elastic material,
however, the coupling engaging of the insert end (31) is secured by a fundamentally rigid peripheral element (46) at the reception end (32) that radially reinforces the reception end (32) externally.

12. Device according to claim 11, **characterized in that** the reception end (32) made from synthetic material and the peripheral element comprise of a metallic ring (46).

13. Device according to claim 12, **characterized in that** the peripheral element is a slit ring (46).

14. Device according to one of the claims 1 to 13, **characterized in that** the shaft (12) comprises of a host of parts of shaft (21 to 23) that feature the reception end (32) on its axial side (26, 53) and the insert end (31) on its other axial side (25, 51) and that, after coupling the parts of shaft (21 to 23) to one another, form a flexible chain (20) of continuous chain links that cannot rotate.

15. Device according to claim 14, **characterized in that** the insert ends (31) on the one side and the reception ends (32) on the other side of all parts of the shaft (21 to 23) in the element chain (20) form the same shape to one another.

16. Device according to claim 14 or 15, **characterized in that** the first and last part of the shaft (21 to 23) in the element chain (20) only feature complementary coupling ends (31, 32) to one another at their outer (53) and inner axial side (51),
that, however, the first part of the shaft (21) has a connection end (55) on its opposite axial side (52) to connect to a cylinder core (11) of the locking cylinder (10) and cannot rotate,
whilst a carrier end (56) is located in the inner axial side (54) of the last part of the shaft that provides a connection, that cannot rotate, to the lock elements (15).

17. Device according to claim 16, **characterized in that** the last part of shaft (23), with its carrier end (56) and the first part of the shaft (21), with a minimum of one part of its connection end (55) is formed as a single part.

18. Device according to claim 16 or 17, **characterized in that** an overload element (50) is integrated in the connection end (55) of the first part of the shaft (21),
which, when the locking cylinder (11) is normally activated by the key provides a connection, that cannot rotate, between the cylinder core (11) and the connection end (55) of the part of the shaft (21),
that, however, if the locking cylinder (10) is forcibly activated by burglary tools, by which a determined torque limit is exceeded, the overload element (50) provides an override between the cylinder core (11) and the connection end (55) of the first part of the shaft (21).

## Revendications

1. Dispositif comprenant un arbre flexible (12) servant à ponter des distances longitudinale et des angles entre un cylindre de fermeture (10) et une serrure (15) sur une porte ou un ouvrant de véhicule,
**caractérisé en ce que**
une partie médiane (24) de l'arbre (12) se compose de segments d'arbre (22.1, 22.2) rigides en eux-mêmes et que chaque pièce d'arbre présente deux extrémités (31, 32) d'accouplement,
dont une est une extrémité à enficher (31) et l'autre une extrémité réceptacle (32) couplable avec elle,
**en ce que** les deux extrémités (31, 32) d'accouplement permettent en cas d'accouplement certes de former dans le sens axial (18) un angle (44) entre segments d'arbre (22.1, 22.2) voisins,
mais **en ce que**, observés dans le sens de rotation de l'arbre (12), les deux extrémités d'accouplement (31, 32) possèdent des surfaces d'accouplement (36) et des surfaces d'accouplement antagonistes (37) non rondes permettant de transmettre un couple de rotation (41, 42) entre les segments d'arbre (22.1, 22.2),
**en ce que** les extrémités d'accouplement (31, 32) des pièces d'arbre d'abord lâches (22.1, 22.2) peuvent engrener l'une dans l'autre comme un loqueteau sous l'effet d'une pression axiale (40), et veiller à la cohésion des segments d'arbre (21 à 23)
et **en ce que** les pièces d'arbre couplées forment une unité constructive continue qu'il est possible de manier pendant le montage du dispositif en tant que tout.

2. Dispositif selon la revendication 1, **caractérisé en ce que** devant la partie médiane (24) de l'arbre (12) est agencé un premier segment d'arbre (21) adapté individuellement au rotor (11), tandis qu'à l'extrémité de la partie médiane (24) se trouve un dernier segment d'arbre (23) adapté aux maillons de serrure (15)
et **en ce qu'**aussi bien le premier que le dernier segment d'arbre (21, 23) présentent leurs propres extrémités d'accouplement (31, 32) qui engrènent avec l'extrémité d'arbre (31, 32) respectivement complémentaire du segment d'arbre voisin (21.1, 22.2) de la partie médiane (24).

3. Dispositif selon la revendication 1 ou 2, **caractérisé en ce que** l'engrènement d'accouplement des deux segments d'arbre (21 à 23) est sécurisé par adhérence de formes et/ou de forces.

4. Dispositif selon l'une des revendications 1 à 3, **caractérisé en ce qu'**au moins une des deux extrémités d'accouplement (31, 32) des segments d'arbre (21 à 23) sont en matériau de forme élastique.

5. Dispositif selon la revendication 4, **caractérisé en ce que** le segment d'arbre (22) et son ou ses extrémités d'arbre (31, 32) sont configurés monobloc en matière plastique.

6. Dispositif selon l'une des revendications 1 à 5, **caractérisé en ce que** les deux extrémités d'accouplement (31, 32) sont profilées de manière réciproquement complémentaire dans le sens axial (28) et/ou dans le sens de rotation des segments d'arbre (22).

7. Dispositif d'actionnement selon l'une des revendications 1 à 6, **caractérisé en ce que** l'extrémité réceptacle (32) du segment d'arbre (22) présente, dans la zone d'ouverture (27), une saillie interne radiale (29), et l'extrémité d'enfichage (31) une saillie externe radiale (34) à la suite d'un segment d'axe (33) mince
et **en ce que** le calibre d'ouverture (38) de l'extrémité réceptacle (32) est, dans la zone de la saillie interne (29), certes plus petit que la largeur radiale (45) dans la zone de la saillie externe (34) de l'extrémité d'enfichage (31), mais plus grand que l'épaisseur radiale (43) du segment d'axe (33) de l'extrémité d'enfichage (31).

8. Dispositif selon la revendication 7, **caractérisé en ce que** l'engrènement de l'accouplement accompli est sécurisé par le fait que la saillie externe (34) de l'extrémité d'enfichage (31) pénètre derrière la saillie intérieure (29) de l'extrémité réceptacle (32)
et **en ce qu'**en cas d'accouplement la saillie interne (29) se trouve dans la zone du segment axial (33) mince de l'extrémité d'enfichage (31).

9. Dispositif selon la revendication 8 ou 9, **caractérisé en ce que** la saillie externe (34) radiale est formée par une tête (35) non ronde à l'extrémité d'enfichage (31) du segment d'arbre (22), tête qui est en assise derrière un segment d'axe en forme de col (col 33)
et **en ce que** la saillie interne (29) sort d'un bourrelet (39) annulaire périphérique à l'intérieur (30) de l'extrémité réceptacle (32).

10. Dispositif selon la revendication 9, **caractérisé en ce que** le col (33) de l'extrémité d'enfichage (31) et du bourrelet annulaire (39) dans l'extrémité réceptacle (32) sont configurés en symétrie de rotation par rapport à l'axe (28) du segment d'arbre (22).

11. Dispositif selon l'une des revendications 1 à 10, **caractérisé en ce que** l'extrémité réceptacle (32) se compose certes d'un matériau certes de forme élastique,
mais **en ce que** l'engrènement de l'extrémité d'enfichage (31) de l'accouplement est sécurisé par un maillon périphérique (46) essentiellement rigide à l'extrémité réceptacle (32), maillon qui rigidifie l'extrémité réceptacle (32) radialement vers l'extérieur.

12. Dispositif selon la revendication 11, **caractérisé en ce que** l'extrémité réceptacle (32) est en matière plastique et **en ce que** le maillon périphérique se compose d'un anneau métallique (46).

13. Dispositif selon la revendication 12, **caractérisé en ce que** le maillon périphérique est un anneau à fente (46).

14. Dispositif selon l'une des revendications 1 à 13, **caractérisé en ce que** l'arbre (12) se compose d'un groupe de segments d'arbre (21 à 23) qui présentent l'extrémité réceptacle (32) sur leur côté axial (26, 53), et l'extrémité d'enfichage (31) saillant de leur autre côté axial (25, 51)
et **en ce que** les segments d'arbre (21 à 23) forment après accouplement réciproque une chaîne flexible (20) composée de maillons accrochés les uns aux autres de manière façon résistante en torsion.

15. Dispositif selon la revendication 14, **caractérisé en ce que** les extrémités d'enfichage (31) d'une part et les extrémités réceptacles (32) d'autre part de tous les segments d'arbre (21 à 23) composant la chaîne à maillons (20) sont configurées de forme réciproquement identique.

16. Dispositif selon la revendication 14 ou 15, **caractérisé en ce que** le premier et le dernier segment d'arbre (21, 23) de la chaîne à maillons (20) ne présentent des extrémités d'accouplement (31, 32) réciproquement complémentaires que sur leur côté axial extérieur (53) et intérieur (51),
mais **en ce que** le premier segment d'arbre (21) possède, sur son côté axial (52) situé en face, une extrémité de raccordement (55) pour raccorder, de façon résistante en torsion, un rotor (11) destiné au cylindre de fermeture (10),
tandis que dans le côté axial intérieur (54) du dernier segment d'arbre se trouve une extrémité (56) de taquet entraîneur servant à établir un jonction résistante en torsion avec les maillons de serrure (15).

17. Dispositif selon la revendication 16, **caractérisé en ce que** le dernier segment d'arbre (23) et son extrémité (56) de taquet entraîneur, et le premier segment d'arbre (21) avec au moins une partie de son extrémité de raccordement (55) sont configurés monobloc.

18. Dispositif selon la revendication 16 ou 17, **caractérisé en ce qu'**un maillon anti-surcharge (50) est intégré dans l'extrémité de raccordement (55) du premier segment d'arbre (21),
maillon qui, lors de l'actionnement normal du cylindre de fermeture (11), veille à une jonction sans torsion entre le rotor (11) du cylindre et l'extrémité de raccordement (55) du segment d'arbre (21),
mais **en ce qu'**en cas d'actionnement violent du cylindre de fermeture (10) par des outils d'effraction, actionnement au cours duquel une certaine limite de couple est dépassée, le maillon anti-surcharge (50) veille à ce qu'une roue libre s'établisse entre le rotor (11) du cylindre et l'extrémité de raccordement (55) du premier segment d'arbre (21).
